# EUROPEAN PATENT APPLICATION

(11) **EP 4 838 618 A1**
(43) Date of publication of application: **11.11.2026**
(21) Application number: 24921363.8
(22) Date of filing: 09.08.2024
(51) Int. Cl.: H01M 10/42

(54) **BATTERY CELL, BATTERY, AND ELECTRIC APPARATUS**

(30) Priority: 02.02.2024 CN 202420267158 U
(71) Applicant: Contemporary Amperex Technology Co., Limited, Ningde, Fujian 352100 (CN)
(72) Inventor: ZHANG, Jijun, Ningde, Fujian 352100 (CN); ZHU, Cuicui, Ningde, Fujian 352100 (CN); DONG, Junjun, Ningde, Fujian 352100 (CN); WANG, Shaofei, Ningde, Fujian 352100 (CN); WEI, Yimin, Ningde, Fujian 352100 (CN)
(74) Representative: Lorenz Seidler Gossel Part. mbB
(86) International application number: PCT/CN2024/111138
(87) International publication number: WO 2025/161334

(57) **Abstract**

Disclosed in the present application are a battery cell, a battery, and an electric apparatus. The battery cell comprises a housing and a detection module, wherein the housing comprises a wall portion, the wall portion comprising a light-transmitting component; and the detection module is arranged inside the housing, and the detection module comprises a detection element and a first optical communication element, the detection element being connected to the first optical communication element, the first element being used for detecting state data of the battery cell, and the first optical communication element being used for transmitting, to the outside of the housing and by means of the light-transmitting component, signal light that is generated on the basis of the state data. Thus, compared with wired transmission, the wireless transmission of state data of a battery to the outer side of a battery cell can further reduce the complexity of wiring harnesses in the battery cell, and it is not necessary to additionally provide, on the housing, a through hole for the wiring harnesses to pass through, thereby reducing the overall processing difficulty.

## Description

The present application claims priority to Chinese Patent Application No. 2024202671584 entitled "BATTERY CELL, BATTERY, AND ELECTRIC DEVICE" filed on February 02, 2024, which is incorporated herein by reference in its entirety.

### TECHNICAL FIELD

The present application relates to the technical field of batteries, and in particular, to a battery cell, a battery, and an electric device.

### BACKGROUND

Energy conservation and emission reduction are key to sustainable development, which in turn promotes the adjustment of energy structure and drives the development and application of battery technologies. The key to the development of battery technology lies in the electrochemical energy storage technology, which has been widely applied to portable electronics, electric vehicles, and energy storage systems due to its advantages such as high energy density, good cycle capability, high operating voltage, environmental friendliness, and low self-discharge.

The battery generally includes one, two, or more battery cells. During the use of the battery cell, the operating state of the battery cell may be monitored by a built-in detection module, and then the generated operating state is transmitted to the outside of the battery cell via wired transmission. However, the wired transmission would result in a redundant overall wire harness, and a structure adapted to the wire harness needs to be further processed on the battery cell, making the overall processing difficult.

### SUMMARY

The primary objective of the present application is to provide a battery cell, a battery, and an electric device, aiming to solve the above technical problems in the prior art.

To solve the above problems, the present application provides a battery cell. The battery cell includes: a housing and a detection module. The housing includes a wall part, the wall part including a light-transmitting component; the detection module is disposed inside the housing, the detection module includes a detection element and a first optical communication element, the detection element is connected to the first optical communication element, the detection element is configured to detect state data of the battery cell, and the first optical communication element is configured to transmit signal light generated based on the state data to an outside of the housing via the light-transmitting component. Therefore, the state data of the battery cell is detected by the built-in detection element, and the first optical communication element transmits the signal light generated based on the state data to the outside of the housing via the light-transmitting component, so as to transmit the state data of the battery to the outside of the battery cell via wireless transmission. Compared with wired transmission, the complexity of the wire harness in the battery cell can be further reduced, and no additional through hole for the wire harness to pass through needs to be formed in the housing, thereby reducing the overall processing difficulty.

In some embodiments, the light-transmitting component penetrates through two opposite side surfaces of the wall part in a thickness direction of the wall part. Therefore, the light-transmitting component penetrating through the two opposite side surfaces of the wall part in the thickness direction of the wall part can facilitate the transmission of the signal light from the inside of the battery cell to the outside of the battery cell via the light-transmitting component, thereby improving the transmission efficiency of the signal light.

In some embodiments, the wall part is provided with a mounting hole penetrating through the wall part in the thickness direction, and the light-transmitting component includes a first light-transmitting part and a second light-transmitting part connected to each other; the first light-transmitting part is embedded in the mounting hole, and the second light-transmitting part is connected to one side, facing the outside of the housing, of the wall part, or the second light-transmitting part is connected to one side, facing an inside of the housing, of the wall part. Therefore, the connection between the second light-transmitting part and one side, facing the outside of the housing, or one side, facing the inside of the housing, of the wall part facilitates the relative fixation of the second light-transmitting part with respect to the housing. In addition, the first light-transmitting part is embedded in the mounting hole, such that the first light-transmitting part can be mounted and limited via the mounting hole, thereby improving the connection stability of the light-transmitting component.

In some embodiments, the light-transmitting component further includes a third light-transmitting part, the second light-transmitting part and the third light-transmitting part are connected to two ends of the first light-transmitting part in the thickness direction, respectively, one of the second light-transmitting part and the third light-transmitting part is connected to one side, facing the outside of the housing, of the wall part, and the other is connected to one side, facing the inside of the housing, of the wall part. Therefore, connecting the third light-transmitting part and the second light-transmitting part to two opposite side surfaces of the wall part, respectively, can further improve the stability of the connection between the light-transmitting component and the wall part.

In some embodiments, the wall part is provided with a mounting hole penetrating through the wall part in a thickness direction of the wall part; the light-transmitting component further includes a light-transmitting main body and a sealing member, the sealing member is disposed around a peripheral side of the light-transmitting main body, and the light-transmitting main body is embedded in the mounting hole by the sealing member. Therefore, the sealing member is disposed around the peripheral side of the light-transmitting main body, such that the light-transmitting main body is embedded in the mounting hole by the sealing member, thereby improving the mounting stability of the light-transmitting main body, enhancing the sealing effect on the mounting hole, and alleviating the risk of leakage of the electrolytic solution or the like inside the battery cell from the mounting hole.

In some embodiments, the sealing member includes a sealing main body part and a sealing connection part, the sealing main body part is provided with a mounting groove, a groove opening of the mounting groove faces the outside of the housing, the light-transmitting main body is disposed in the mounting groove, and the sealing connection part is connected to one side, facing the outside of the housing, of the wall part. Therefore, the groove opening of the mounting groove faces the outside of the housing, and the light-transmitting main body is disposed in the mounting groove, such that the mounting and fixation of the light-transmitting main body can be facilitated by the sealing main body. In addition, the sealing connection part is connected to one side, facing the outside of the housing, of the wall part, such that the fixation method of the light-transmitting component can be simplified by the sealing member, and the mounting efficiency can be improved.

In some embodiments, a bottom wall of the mounting groove is provided with a light-transmitting hole, the light-transmitting hole communicates an inside of the housing with the mounting groove, the light-transmitting main body covers the light-transmitting hole, and the signal light is transmitted to the outside of the housing via the light-transmitting hole and the light-transmitting main body. Therefore, forming the light-transmitting hole in the bottom wall of the mounting groove and allowing the light-transmitting main body to cover the light-transmitting hole can facilitate the transmission of the signal light from the inside of the battery cell to the outside of the battery cell via the light-transmitting component, thereby improving the transmission stability of the signal light.

In some embodiments, the mounting hole is a liquid injection hole. Therefore, by using the liquid injection hole as the mounting hole, no additional mounting hole needs to be formed in the wall part to accommodate the light-transmitting component, thereby simplifying the overall structure.

In some embodiments, the battery cell further includes an electrode post terminal and a first conductive member, the electrode post terminal passes through the wall part, and the first conductive member is located inside the housing and separately connected to the electrode post terminal and the detection module, such that the electrode post terminal and the detection module form a current circuit. Therefore, the formation of the current circuit between the detection module and the electrode post terminal by the first conductive member can facilitate power supply to the detection module via the electrode post terminal, thereby reducing the difficulty in supplying power to the detection module.

In some embodiments, the electrode post terminal further includes a positive electrode post terminal and a negative electrode post terminal, the positive electrode post terminal and the negative electrode post terminal each pass through the wall part, the detection module is disposed between the positive electrode post terminal and the negative electrode post terminal, the first conductive member includes two first wires, one first wire connects the positive electrode post terminal to the detection module, and the other first wire connects the negative electrode post terminal to the detection module. Therefore, the detection module is disposed between the positive electrode post terminal and the negative electrode post terminal, such that the wire harness lengths of the two first wires can be reduced at the same time, the complexity of the wire harness layout can be simplified, and the difficulty in supplying power to the detection module can be reduced.

In some embodiments, the battery cell further includes a lower plastic member, the lower plastic member is disposed in an attached manner on one side, facing an inside of the housing, of the wall part, the lower plastic member is provided with an accommodating groove, a groove opening of the accommodating groove faces the wall part, and the detection module is disposed in the accommodating groove. Therefore, by disposing the lower plastic member in an attached manner on one side, facing the inside of the housing, of the wall part, electrical insulation can be achieved between the inside of the housing and the wall part via the lower plastic member. By forming the accommodating groove in the lower plastic member to dispose the detection module in the accommodating groove, the complexity of mounting and fixing the detection module can be simplified.

In some embodiments, the battery cell further includes a data processing module, the data processing module is disposed outside the housing, the data processing module includes a second optical communication element and a data processing element connected to each other, the second optical communication element is configured to receive the signal light, and the data processing element is configured to receive data generated based on the signal light. Therefore, the data processing module is disposed outside the housing, such that the second optical communication element receives the signal light outside the housing, and the state data of the battery cell is received by the data processing element, thereby enabling the sending and receiving of data of the battery cell via optical signal transmission. Compared with wired transmission, the complexity of the wire harness in the battery cell can be further reduced, and no additional through hole for the wire harness to pass through needs to be formed in the housing, thereby reducing the overall processing difficulty.

In some embodiments, the first optical communication element, the light-transmitting component, and the second optical communication element are sequentially disposed in a thickness direction of the wall part. Therefore, the first optical communication element, the light-transmitting component, and the second optical communication element are sequentially disposed in the thickness direction of the wall part, which can reduce the transmission path of the signal light, improve the receiving efficiency of the signal light, and further improve the overall data transmission efficiency.

In some embodiments, the battery cell further includes an electrode post terminal and a second conductive member, the electrode post terminal passes through the wall part, and the second conductive member is located outside the housing and separately connected to the electrode post terminal and the data processing module, such that the electrode post terminal and the data processing module form a current circuit. Therefore, the formation of the current circuit between the data processing module and the electrode post terminal by the second conductive member can facilitate power supply to the data processing module via the electrode post terminal, thereby reducing the difficulty in supplying power to the data processing module.

In some embodiments, the electrode post terminal further includes a positive electrode post terminal and a negative electrode post terminal, the positive electrode post terminal and the negative electrode post terminal each pass through the wall part, the data processing module is disposed between the positive electrode post terminal and the negative electrode post terminal, the second conductive member includes two second wires, one second wire connects the positive electrode post terminal to the data processing module, and the other second wire connects the negative electrode post terminal to the data processing module. Therefore, the data processing module is disposed between the positive electrode post terminal and the negative electrode post terminal, such that the wire harness lengths of the two second wires can be reduced at the same time, the complexity of the wire harness layout can be simplified, and the difficulty in supplying power to the data processing module can be reduced.

In some embodiments, the data processing module further includes a wireless communication element, the wireless communication element is connected to the data processing element, and the wireless communication element is configured to transmit data generated based on the signal light to an external device. Therefore, the data generated based on the signal light can be transmitted to the external device by the wireless communication element. Compared with wired transmission, the complexity of the wire harness can be reduced, and the entire communication method can be simpler.

In some embodiments, the detection element includes one or more of a temperature sensor, a gas pressure sensor, a voltage sensor, and an impedance sensor. Therefore, the detection element includes one or more of a temperature sensor, a gas pressure sensor, a voltage sensor, and an impedance sensor, which is conducive to detecting the operating state of the battery cell in a targeted manner and facilitates targeted management of the battery cell.

To solve the above problems, the present application provides a battery. The battery includes the battery cell described above.

To solve the above problems, the present application provides an electric device. The electric device includes the battery as described above.

### BRIEF DESCRIPTION OF THE DRAWINGS

To more clearly illustrate the technical solutions in embodiments of the present application or the prior art, the drawings required for describing the embodiments will be briefly introduced below. Apparently, the drawings in the following description are merely some embodiments of the present application. For those of ordinary skill in the art, other drawings can be obtained based on these drawings without creative efforts.
FIG. 1 is a schematic structural diagram of a vehicle according to one or more embodiments of the present application;
FIG. 2 is a schematic diagram of an exploded structure of a battery according to one or more embodiments of the present application;
FIG. 3 is a schematic diagram of an exploded structure of a battery cell according to one or more embodiments of the present application;
FIG. 4 is a schematic top structural diagram of the battery cell shown in FIG. 3;
FIG. 5 is a first cross-sectional schematic structural diagram of the battery cell shown in FIG. 4 in an A-A direction;
FIG. 6 is a second cross-sectional schematic structural diagram of the battery cell shown in FIG. 4 in an A-A direction;
FIG. 7 is a third cross-sectional schematic structural diagram of the battery cell shown in FIG. 4 in an A-A direction;
FIG. 8 is a fourth cross-sectional schematic structural diagram of the battery cell shown in FIG. 4 in an A-A direction; and
FIG. 9 is a fifth cross-sectional schematic structural diagram of the battery cell shown in FIG. 4 in an A-A direction.

Reference numerals: vehicle 1; battery 2; controller 3; motor 4; case 20; first part 21; second part 22; battery cell 10; housing 100; wall part 110; mounting hole 111; housing body 120; electrode assembly 130; electrode post terminal 140; positive electrode post terminal 141; negative electrode post terminal 142; detection module 200; first optical communication element 210; signal light 211; detection element 220; light-transmitting component 300; first light-transmitting part 310; second light-transmitting part 320; third light-transmitting part 330; light-transmitting main body 340; sealing member 400; sealing main body part 410; light-transmitting hole 411; sealing connection part 420; mounting groove 430; data processing module 500; second optical communication element 510; data processing element 520; wireless communication element 530; first conductive member 600; first wire 610; second conductive member 700; second wire 710; lower plastic member 800; accommodating groove 810.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

At present, judging from the trends of the market situation, the application of batteries is becoming increasingly widespread. Batteries are not only applied in energy storage power systems such as hydropower, thermal power, wind power, and solar power stations, but also widely applied in electric transportation vehicles such as electric bicycles, electric motorcycles, or electric vehicles, as well as in military equipment, aerospace, and other fields. With the continuous expansion of the application field of batteries, the market demand for batteries is also constantly increasing.

Batteries mentioned in the art may be classified into disposable batteries and rechargeable batteries according to whether they are rechargeable. A primary battery, also referred to as a "disposable" battery, cannot be recharged after the battery runs out and can only be discarded. A rechargeable battery is also referred to as a secondary battery or a storage battery. The materials and processes for manufacturing rechargeable batteries are different from those for primary batteries. The advantage of rechargeable batteries lies in being able to be cycled many times after charging. In addition, the output current load capacity of rechargeable batteries is higher than that of most disposable batteries. Currently, common types of rechargeable batteries include: lead-acid batteries, nickel-hydrogen batteries, and lithium-ion batteries. Lithium-ion batteries embrace the advantages of light weight, large capacity (1.5 to 2 times that of nickel-hydrogen batteries of the same weight), no memory effect, and the like, and have a very low self-discharge rate. Therefore, even if the price is relatively high, lithium-ion batteries still find widespread application. Lithium-ion batteries are currently also widely used in pure electric vehicles and hybrid electric vehicles. Lithium-ion batteries for this purpose have a relatively low capacity and high cost, but have a great output and charging current and a long service life.

The battery described in the embodiments of the present application refers to a rechargeable battery or a disposable battery. The embodiments disclosed in the present application are mainly described below by taking a lithium-ion battery as an example. It will be appreciated that the embodiments disclosed in the present application are applicable to any other suitable type of rechargeable battery. The battery mentioned in the embodiments disclosed in the present application may be directly or indirectly applied to an appropriate device for power supply.

The present application provides an electric device. The electric device may include, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, and electric airplane toys. The spacecraft may include airplanes, rockets, space shuttles, spaceships, and the like. The electric device may include a battery, and the electric device may provide electric energy via the battery to achieve corresponding functions.

The present application further provides an electric vehicle. The electric vehicle may include a battery.

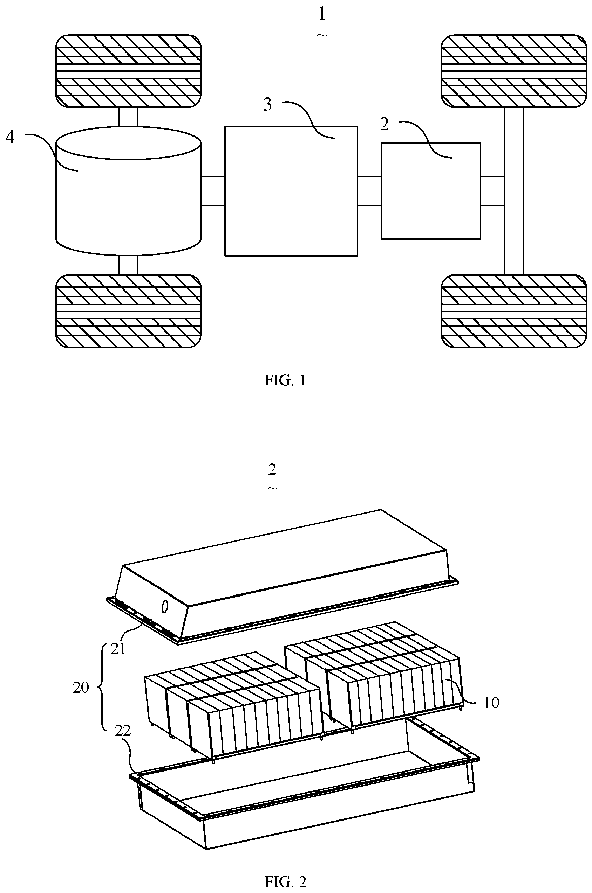

Referring to FIG. 1, FIG. 1 is a schematic structural diagram of a vehicle according to one or more embodiments of the present application.

The vehicle 1 may be a fuel vehicle, a gas vehicle, or a new energy vehicle. The new energy vehicle may be a pure electric vehicle, a hybrid vehicle, an extended-range vehicle, or the like. A battery 2 is disposed inside the vehicle 1, and the battery 2 may be disposed at the bottom, head, or tail of the vehicle 1. The battery 2 may be configured to supply power to the vehicle 1. For example, the battery 2 may serve as an operation power source for the vehicle 1. The vehicle 1 may further include a controller 3 and a motor 4. The controller 3 is configured to control the battery 2 to supply power to the motor 4, e.g., for the operation power needed by the vehicle 1 for start-up, navigation, and driving.

In some embodiments of the present application, the battery 2 may not only serve as the operation power source for the vehicle 1, but also as a driving power source for the vehicle 1 to, replacing or partially replacing fuel or natural gas, provide driving power for the vehicle 1.

To improve the performance of the electric device, the present application further provides a battery. Referring to FIG. 2, FIG. 2 is a schematic diagram of an exploded structure of a battery according to one or more embodiments of the present application.

The shape of the battery may include, but is not limited to, a prismatic-cylindrical shape or any other shape.

In some embodiments, the battery 2 may include a case 20 and a battery cell 10. The battery cell 10 is accommodated in the case 20. The case 20 is configured to provide an accommodating space for the battery cell 10, and the case 20 can be of various structures. In some embodiments, the case 20 may include a first part 21 and a second part 22. The first part 21 and the second part 22 cover each other, and the first part 21 and the second part 22 jointly define an accommodating space for accommodating the battery cell 10. The second part 22 may be of a hollow structure with one end open, and the first part 21 may be of a plate-shaped structure. The open side of the second part 22 is lidded with the first part 21, such that the first part 21 and the second part 22 jointly define the accommodating space. The first part 21 and the second part 22 may also both be of a hollow structure with one side open, and the open side of the second part 22 is lidded with the open side of the first part 21.

In the battery 2, a plurality of battery cells 10 may be provided, and the plurality of battery cells 10 may be connected in series, in parallel, or in series-parallel. The series-parallel connection means that both series connection and parallel connection are present for the connection among the plurality of battery cells 10. The plurality of battery cells 10 may be directly connected in series, in parallel, or in series-parallel, and then the whole formed by the plurality of battery cells 10 is accommodated in the case 20. Certainly, the situation may also be that in the battery 2, the plurality of battery cells 10 are first connected in series, in parallel, or in series-parallel to form battery modules, and then the plurality of battery modules are connected in series, in parallel, or in series-parallel to form a whole and accommodated in the case 20. The battery 2 may further include other structures. For example, the battery 2 may further include a busbar component for achieving an electrical connection among the plurality of battery cells 10.

The manufacturing methods for the battery cell 10 include the stacking method and the winding method, that is, the battery cell 10 can be classified into stacked batteries and wound batteries. The stacked batteries offer uniform current collection, low internal resistance, and high specific power. However, in order to improve precision, the mold precision requirements are extremely high, the investment in equipment is high, the process is relatively complicated, and the production efficiency is low. The manufacture of the wound batteries is simple, and the production and assembly processes require general equipment precision, with high production efficiency and low cost. In terms of performance, the wound batteries exhibit excellent high- and low-temperature performance, rapid charging capabilities, ultra-long service life, stable high output voltage, robust structure, and strong shock resistance.

In related embodiments, during the use of the battery cell, the operating state of the battery cell may be monitored by a built-in detection module, and then the generated operating state is transmitted to the outside of the battery cell via wired transmission. However, the wired transmission would result in a redundant overall wire harness, and a structure adapted to the wire harness needs to be further processed on the battery cell, making the overall processing difficult.

In order to solve the technical problems in the related art, the present application provides a battery cell. A housing of the battery cell is provided with a light-transmitting component for transmitting light, and the battery cell is internally provided with a detection module. The internal state data of the battery cell is detected by the detection module, and then the internal state data is converted into signal light by the detection module. The signal light is transmitted from the inside to the outside of the housing by the light-transmitting component, thereby replacing the conventional solution in which the state data is transmitted from the inside to the outside of the housing in a wired manner.

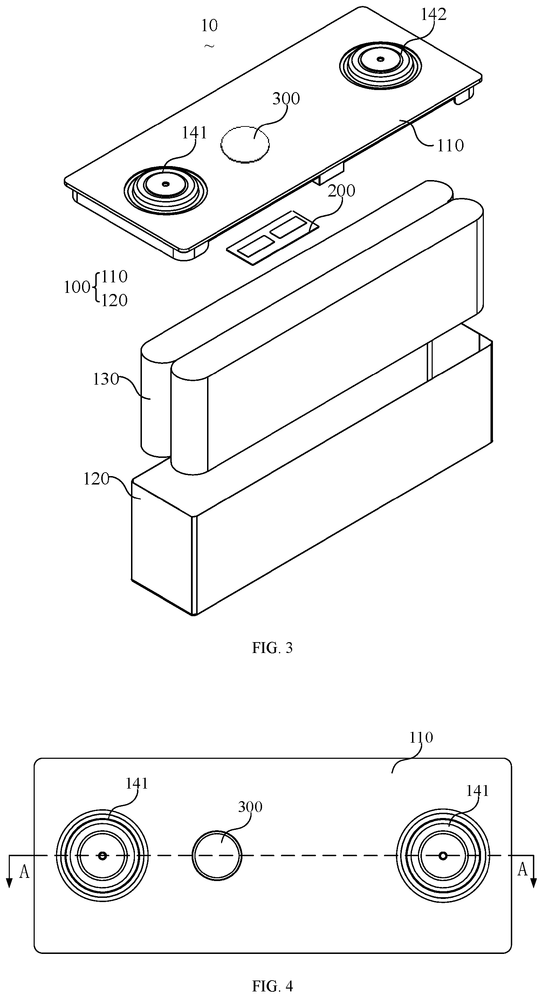

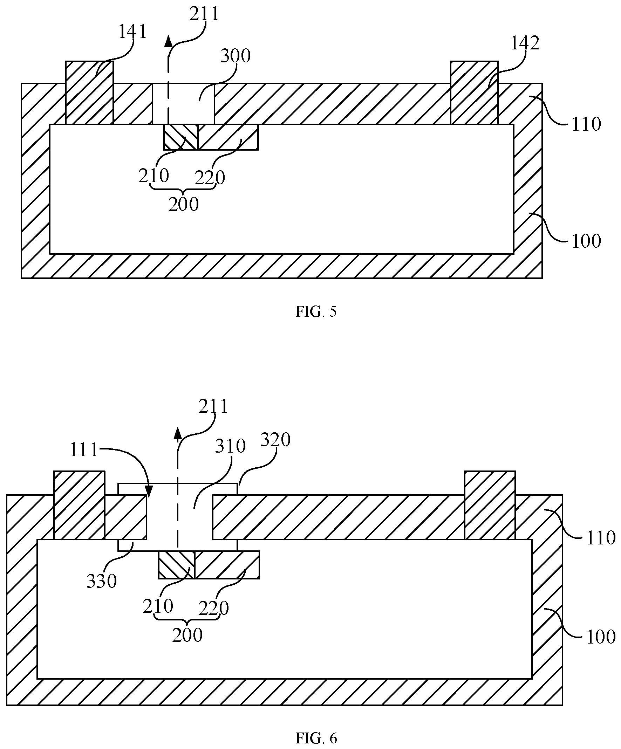

Specifically, referring to FIGs. 3 to 5, FIG. 3 is a schematic diagram of an exploded structure of a battery cell according to one or more embodiments of the present application, FIG. 4 is a schematic top structural diagram of the battery cell shown in FIG. 3, and FIG. 5 is a first cross-sectional schematic structural diagram of the battery cell shown in FIG. 4 in an A-A direction.

The battery cell 10 includes a housing 100 and a detection module 200. The housing 100 includes a wall part 110, and the wall part 110 includes a light-transmitting component 300. The detection module 200 is disposed inside the housing 100 and includes a detection element 220 and a first optical communication element 210. The detection element 220 is connected to the first optical communication element 210, the detection element 220 is configured to detect state data of the battery cell 10, and the first optical communication element 210 is configured to transmit signal light 211 generated based on the state data to the outside of the housing 100 via the light-transmitting component 300.

The wall part 110 may be any side wall of the housing 100. Illustratively, when the housing 100 is in a prismatic shape, parts corresponding to six side surfaces of the prismatic housing 100 may all serve as the wall part 110 in the embodiments. When the housing 100 includes an end cover and a housing body 120, the wall part 110 may be the end cover. Specifically, the end cover refers to a component that covers the opening of the housing body 120 to isolate the internal environment of the battery cell 10 from the external environment. Without limitation, the shape of the end cover may be adapted to the shape of the housing body 120 to match the housing body 120. Optionally, the end cover may be made of a material with a certain hardness and strength (for example, an aluminum alloy), such that the end cover is not easily deformed when being squeezed or collided. This enables the battery cell 10 to have higher structural strength, and the safety performance can also be improved. In some embodiments, the end cover may also be provided with an anti-explosion member for releasing the internal pressure when the internal pressure or temperature of the battery cell 10 reaches a threshold. The end cover may also be made of various materials, such as copper, iron, aluminum, stainless steel, aluminum alloy, and plastic, which is not specifically limited in the embodiments of the present application. The housing body 120 is an assembly configured to form the internal environment of the battery cell 10 in combination with the end cover. The formed internal environment may be used to accommodate the electrode assembly 130, the electrolyte, and other components. The housing body 120 and the end cover may be independent components. An opening may be formed in the housing body 120, and at the opening, the end cover covers the opening to form the internal environment of the battery cell 10. Without limitation, the end cover and the housing body 120 may also be integrated. Specifically, the end cover and the housing body 120 may form a common connecting surface before other components are placed in the housing body, and when the interior of the housing body 120 needs to be encapsulated, the housing body 120 is covered with the end cover. The battery cell 10 may further include an electrode assembly 130, and the electrode assembly 130 is a component where the electrochemical reaction occurs in the battery cell 10. One or more electrode assemblies 130 may be accommodated in the housing body 120. The electrode assembly 130 is mainly formed by winding or stacking a positive electrode plate and a negative electrode plate, and a separator is generally disposed between the positive electrode plate and the negative electrode plate. The parts of the positive electrode plate and the negative electrode plate that contain the active substance constitute the main body part of the electrode assembly 130, and the parts of the positive electrode plate and the negative electrode plate that do not contain the active substance each constitute a tab. A positive electrode tab and a negative electrode tab may be located together at one end of the main body part or separately at two ends of the main body part. During the charging and discharging process of the battery, the positive electrode active substance and the negative electrode active substance react with the electrolyte, and the tabs are connected to the electrode terminals to form a current circuit.

The light-transmitting component 300 may allow light to pass through. For example, light may be transmitted from one side surface to another side surface of the light-transmitting component 300. The light-transmitting component 300 may be in any shape. The light-transmitting component 300 may be embedded in the wall part 110 of the housing 100, or the entire wall part 110 may serve as the light-transmitting component 300, or the like. The light-transmitting component 300 may allow light inside the housing 100 to be transmitted to the outside of the housing 100 via the light-transmitting component 300. The detection module 200 may be entirely located inside the housing 100. The detection module 200 includes a detection element 220 and a first optical communication element 210. The detection element 220 may be configured to detect state data of the battery cell 10. Illustratively, the state data may include, but is not limited to, temperature data, gas pressure data, voltage data, and/or impedance data. The first optical communication element 210 includes, but is not limited to, an infrared optical communication element. The first optical communication element 210 may be configured to receive or emit signal light 211, and the signal light 211 may penetrate the light-transmitting component 300 from the inside of the housing 100 to the outside of the housing 100. In some embodiments, after the detection element 220 detects the state data of the battery cell 10, the detection element 220 may convert the state data into the signal light 211, and the first optical communication element 210 transmits the signal light 211 through the light-transmitting component 300 to the outside of the housing 100. Alternatively, after the detection element 220 detects the state data of the battery cell 10, the state data may be transmitted to the first optical communication element 210, and the first optical communication element 210 converts the state data into the signal light 211 and transmits the signal light 211 through the light-transmitting component 300 to the outside of the housing 100. The signal light 211 may be directly emitted to the light-transmitting component 300 so as to be directly emitted via the light-transmitting component 300. Alternatively, another light guide element may be provided, and the light guide element is disposed on a light path of the signal light 211 to receive and guide the signal light 211 to the light-transmitting component 300. After the signal light 211 is transmitted out of the housing 100, the signal light 211 may be received and demodulated by other modules to obtain the state data of the battery cell 10 in a wireless manner.

According to the above embodiments, the state data of the battery cell 10 is detected by the built-in detection element 220, and the first optical communication element 210 transmits the signal light 211 generated based on the state data to the outside of the housing 100 via the light-transmitting component 300, so as to transmit the state data of the battery to the outside of the battery cell 10 via wireless transmission. Compared with wired transmission, the complexity of the wire harness in the battery cell 10 can be further reduced, and no additional through hole for the wire harness to pass through needs to be formed in the housing 100, thereby reducing the overall processing difficulty.

In some embodiments, the detection element 220 includes one or more of a temperature sensor, a gas pressure sensor, a voltage sensor, and an impedance sensor. Therefore, the detection element 220 includes one or more of a temperature sensor, a gas pressure sensor, a voltage sensor, and an impedance sensor, which is conducive to detecting the operating state of the battery cell 10 in a targeted manner and facilitates targeted management of the battery cell 10.

Further, the light-transmitting component 300 penetrates through two opposite side surfaces of the wall part 110 in the thickness direction of the wall part 110. The light-transmitting component 300 may be in any shape. For example, the light-transmitting component 300 may be cylindrical, prismatic, truncated cone-shaped, conical, or inclined columnar in shape, among others. The light-transmitting component 300 penetrates through the two opposite side surfaces of the wall part 110 in the thickness direction of the wall part 110; that is, the light-transmitting component 300 is exposed both inside and outside the housing 100. When the signal light 211 is incident to the light-transmitting component 300 from the inside of the housing 100, the signal light can be emitted to the outside of the housing 100 via the light-transmitting component 300, such that the state data of the battery cell 10 is transmitted from the inside of the housing 100 to the outside of the housing 100 via wireless transmission, thus improving the transmission efficiency of the signal light 211.

Referring to FIG. 6, FIG. 6 is a second cross-sectional schematic structural diagram of the battery cell 10 shown in FIG. 4 in an A-A direction.

The wall part 110 is provided with a mounting hole 111 penetrating through the wall part 110 in the thickness direction. The light-transmitting component 300 includes a first light-transmitting part 310 and a second light-transmitting part 320 connected to each other. The first light-transmitting part 310 is embedded in the mounting hole 111, and the second light-transmitting part 320 is connected to one side, facing the outside of the housing 100, of the wall part 110, or the second light-transmitting part 320 is connected to one side, facing the inside of the housing 100, of the wall part 110. The first light-transmitting part 310 and the second light-transmitting part 320 may be columnar, frustum-shaped, or tapered in shape, among others. The shape of the mounting hole 111 may match the shape of the first light-transmitting part 310, and the radial dimension of the mounting hole 111 may be slightly larger than the radial dimension of the first light-transmitting part 310, such that the first light-transmitting part 310 is inserted into the mounting hole 111, and the outer side wall of the first light-transmitting part 310 is closely attached to the inner side wall of the mounting hole 111. The radial dimension of the second light-transmitting part 320 may be larger than the radial dimension of the first light-transmitting part 310. When the first light-transmitting part 310 is inserted into the mounting hole 111, the second light-transmitting part 320 may overlap one side, facing the outside of the housing 100, of the wall part 110, or overlap one side, facing the inside of the housing 100, of the wall part 110, such that the light-transmitting component 300 and the wall part 110 remain relatively fixed. For example, the second light-transmitting part 320 may be fixedly connected to the wall part 110 by means of bonding, welding, fusing, or the like.

Further, the light-transmitting component 300 further includes a third light-transmitting part 330. The second light-transmitting part 320 and the third light-transmitting part 330 are connected to two ends of the first light-transmitting part 310 in the thickness direction, respectively. One of the second light-transmitting part 320 and the third light-transmitting part 330 is connected to one side, facing the outside of the housing 100, of the wall part 110, and the other is connected to one side, facing the inside of the housing 100, of the wall part 110. The third light-transmitting part 330 and the second light-transmitting part 320 are located at two ends of the first light-transmitting part 310, respectively, and the radial dimensions of the third light-transmitting part 330 and the second light-transmitting part 320 may both be larger than the radial dimension of the first light-transmitting part 310, such that the common schematic cross-sectional view of the first light-transmitting part 310, the second light-transmitting part 320, and the third light-transmitting part 330 presents an I-shape. The first light-transmitting part 310 is located in the mounting hole 111, one of the second light-transmitting part 320 and the third light-transmitting part 330 is connected to one side, facing the outside of the housing 100, of the wall part 110, and the other is connected to one side, facing the inside of the housing 100, of the wall part 110, which can further improve the stability of the connection between the light-transmitting component 300 and the wall part 110.

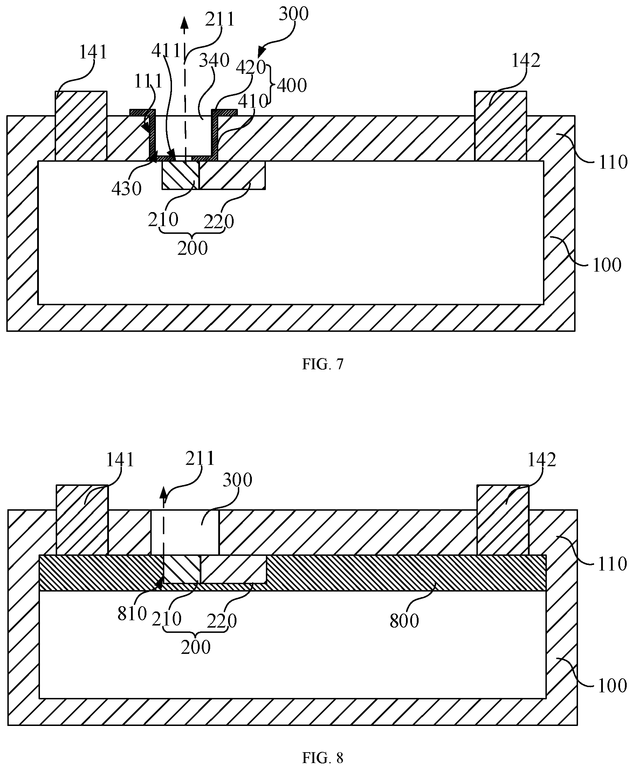

Referring to FIG. 7, FIG. 7 is a third cross-sectional schematic structural diagram of the battery cell 10 shown in FIG. 4 in an A-A direction.

The wall part 110 is provided with a mounting hole 111 penetrating through the wall part 110 in the thickness direction of the wall part 110. The light-transmitting component 300 further includes a light-transmitting main body 340 and a sealing member 400. The sealing member 400 is disposed around the peripheral side of the light-transmitting main body 340, and the light-transmitting main body 340 is embedded in the mounting hole 111 by the sealing member 400. The light-transmitting main body 340 may allow light to pass through. For example, light may be transmitted from one side surface to another side surface of the light-transmitting main body 340. The sealing member 400 may be a sealing plastic. The sealing member 400 may be annular in shape, and the annular sealing member 400 is sleeved on a part of the outer peripheral side of the light-transmitting main body 340. Alternatively, the sealing member 400 may be sleeve-shaped in shape, and the sleeve-shaped sealing member 400 may be sleeved on the entire outer peripheral side of the light-transmitting main body 340. The shape of the mounting hole 111 may match the shape of the sealing member 400, and the radial dimension of the mounting hole 111 may be slightly larger than the radial dimension of the sealing member 400, such that when the light-transmitting main body 340 is embedded in the mounting hole 111 by the sealing member 400, the outer side wall of the sealing member 400 is closely attached to the inner side wall of the mounting hole 111. Therefore, the sealing member 400 is disposed around the peripheral side of the light-transmitting main body 340, such that the light-transmitting main body 340 is embedded in the mounting hole 111 by the sealing member 400, thereby improving the mounting stability of the light-transmitting main body 340, enhancing the sealing effect on the mounting hole 111, and alleviating the risk of leakage of the electrolytic solution or the like inside the battery cell 10 from the mounting hole 111.

Further, the sealing member 400 includes a sealing main body part 410 and a sealing connection part 420. The sealing main body part 410 is provided with a mounting groove 430, the groove opening of the mounting groove 430 faces the outside of the housing 100, the light-transmitting main body 340 is disposed in the mounting groove 430, and the sealing connection part 420 is connected to one side, facing the outside of the housing 100, of the wall part 110. The sealing main body part 410 may be hollow columnar in shape, and the hollow part forms the mounting groove 430. The light-transmitting main body 340 is disposed in the mounting groove 430, and the light-transmitting main body 340 is limited by the bottom wall of the mounting groove 430. Meanwhile, the shape of the mounting groove 430 may match the shape of the light-transmitting main body 340, and the radial dimension of the mounting groove 430 is slightly larger than the radial dimension of the light-transmitting main body 340, such that the light-transmitting main body 340 can be stably embedded in the mounting groove 430. The outer diameter of the sealing main body part 410 may be slightly smaller than the inner diameter of the mounting hole 111, such that when the light-transmitting main body 340 is embedded in the mounting hole 111 by the sealing main body part 410, the outer side wall of the sealing main body part 410 is closely attached to the inner side wall of the mounting hole 111. The sealing connection part 420 is connected to one side, proximal to the outside of the housing 100, of the sealing main body part 410, and the sealing connection part 420 may be disposed around the outer periphery of the sealing main body part 410 and extend outward. When the sealing main body part 410 is inserted into the mounting hole 111, the sealing connection part 420 may overlap one side, facing the outside of the housing 100, of the wall part 110, such that the sealing member 400 and the wall part 110 remain relatively fixed. For example, the sealing connection part 420 may be fixedly connected to the wall part 110 by means of bonding, welding, or the like, thereby further simplifying the fixation method of the light-transmitting component 300 by the sealing member 400, improving the mounting efficiency, and the like.

Further, the bottom wall of the mounting groove 430 is provided with a light-transmitting hole 411, the light-transmitting hole 411 communicates the inside of the housing 100 with the mounting groove 430, the light-transmitting main body 340 covers the light-transmitting hole 411, and the signal light 211 is transmitted to the outside of the housing 100 via the light-transmitting hole 411 and the light-transmitting main body 340. The size of the light-transmitting hole 411 may be set according to actual situations. The radial dimension of the light-transmitting hole 411 may be smaller than the radial dimension of the light-transmitting main body 340, such that the light-transmitting main body 340 can be borne in the mounting groove 430. When the light-transmitting hole 411 is borne in the mounting groove 430, the light-transmitting main body 340 may cover the light-transmitting hole 411. When the first optical communication element 210 emits the signal light 211, the signal light 211 may be incident to the light-transmitting main body 340 from one side of the light-transmitting main body 340 via the light-transmitting hole 411 and emitted from the other side of the light-transmitting main body 340, such that the signal light 211 is conveniently transmitted from the inside of the battery cell 10 to the outside of the battery cell 10 via the light-transmitting component 300, thereby improving the transmission stability of the signal light 211.

In some embodiments, the mounting hole 111 is a liquid injection hole. The liquid injection hole may be understood as a through hole penetrating through the wall part 110. During the production of the battery cell 10, an electrolytic solution may be injected into the housing 100 via the liquid injection hole. By directly using the liquid injection hole as the mounting hole 111, no additional mounting hole 111 needs to be formed in the wall part 110 to accommodate the light-transmitting component 300, thereby simplifying the overall structure.

Referring to FIG. 8, FIG. 8 is a fourth cross-sectional schematic structural diagram of the battery cell 10 shown in FIG. 4 in an A-A direction.

The battery cell 10 further includes a lower plastic member 800. The lower plastic member 800 is disposed in an attached manner on one side, facing the inside of the housing 100, of the wall part 110. The lower plastic member 800 is provided with an accommodating groove 810, the groove opening of the accommodating groove 810 faces the wall part 110, and the detection module 200 is disposed in the accommodating groove 810. The lower plastic member 800 may be integrally pre-molded from plastic or assembled from plastic components, and the material of the lower plastic member 800 may include an insulating material. The lower plastic member 800 can provide insulating properties and improve the electrical insulation between the inside of the housing 100 and the wall part 110. In addition, the lower plastic member 800 can also fix and protect the electrode assembly 130 inside the housing 100, thereby reducing the risk of disconnection of elements such as the electrode assembly 130 inside the housing 100 due to displacement during the transportation and use of the battery cell 10, especially in a vibration environment. The connection manner between the lower plastic member 800 and the wall part 110 includes, but is not limited to, welding, adhesion, or snap-fit connection. Specifically, a plurality of protrusions may be disposed on one side, facing the wall part 110, of the lower plastic member 800, and the wall part 110 may be provided with holes corresponding to the protrusions. When the lower plastic member 800 is attached to the wall part 110, the protrusions snap into the holes, thereby achieving the purpose of connecting the lower plastic member 800 to the wall part 110. The groove opening of the accommodating groove 810 faces the wall part 110, such that when the lower plastic member 800 is attached to the wall part 110, the detection module 200 can be mounted in the accommodating groove 810 as a whole, and then the detection module 200 is borne by the lower plastic member 800, thereby simplifying the complexity of mounting and fixing the detection module 200.

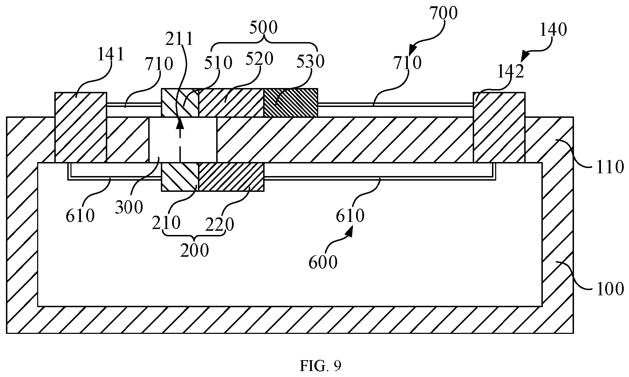

Referring to FIG. 9, FIG. 9 is a fifth cross-sectional schematic structural diagram of the battery cell 10 shown in FIG. 4 in an A-A direction.

The battery cell 10 further includes an electrode post terminal 140 and a first conductive member 600. The electrode post terminal 140 passes through the wall part 110, and the first conductive member 600 is located inside the housing 100 and separately connected to the electrode post terminal 140 and the detection module 200, such that the electrode post terminal 140 and the detection module 200 form a current circuit. The electrode post terminal 140 may be configured to connect the battery cell 10 to an external circuit, serving as a charging and discharging interface for the battery cell 10. Specifically, the electrode post terminal 140 passes through the wall part 110, one end, located outside the housing 100, of the electrode post terminal 140 may be electrically connected to an external device, and one end, located inside the housing 100, of the electrode post terminal 140 may be electrically connected to a tab of the electrode assembly 130 to form a current circuit, such that the battery cell 10 can be charged or discharged via the electrode post terminal 140. The first conductive member 600 may be a structure such as a wire or a conductive sheet, and the first conductive member 600 may be separately connected to the detection module 200 and the electrode post terminal 140, such that the electrode post terminal 140 and the detection module 200 can form a current circuit via the first conductive member 600, and then the detection module 200 may be energized by the electrode post terminal 140, thereby reducing the difficulty in supplying power to the detection module 200.

Further, the electrode post terminal 140 further includes a positive electrode post terminal 141 and a negative electrode post terminal 142. The positive electrode post terminal 141 and the negative electrode post terminal 142 each pass through the wall part 110. The detection module 200 is disposed between the positive electrode post terminal 141 and the negative electrode post terminal 142. The first conductive member 600 includes two first wires 610, one first wire 610 connects the positive electrode post terminal 141 to the detection module 200, and the other first wire 610 connects the negative electrode post terminal 142 to the detection module 200. The detection module 200, the positive electrode post terminal 141, and the negative electrode post terminal 142 may be located on the same straight line. The detection module 200 may be located at the middle position between the positive electrode post terminal 141 and the negative electrode post terminal 142, or the detection module 200 may be disposed closer to the negative electrode post terminal 142 or the positive electrode post terminal 141, such that the wire harness lengths of the two first wires 610 can be reduced at the same time, the complexity of the wire harness layout can be simplified, and the difficulty in supplying power to the detection module 200 can be reduced.

In some embodiments, the battery cell 10 further includes a data processing module 500. The data processing module 500 is disposed outside the housing 100, and the data processing module 500 includes a second optical communication element 510 and a data processing element 520 connected to each other. The second optical communication element 510 is configured to receive the signal light 211, and the data processing element 520 is configured to receive data generated based on the signal light 211. The data processing module 500 may be fixedly mounted on one side surface, facing the outside of the housing 100, of the wall part 110. The second optical communication element 510 includes, but is not limited to, an infrared optical communication element. The second optical communication element 510 may be configured to receive or emit signal light 211, and the signal light 211 emitted by the first optical communication element 210 is received by the second optical communication element 510 after the signal light penetrates the light-transmitting component 300 from the inside of the housing 100 to the outside of the housing 100. In some embodiments, after receiving the signal light 211, the second optical communication element 510 may convert the signal light 211 into state data of the battery cell 10, and then transmit the state data to the data processing element 520, such that the data processing element 520 receives data generated based on the signal light 211. When the detection module 200 needs to be controlled to acquire data, the second optical communication element 510 may emit light to the first optical communication element 210, and then the first optical communication element 210 demodulates the light to obtain a control signal, such that the detection element 220 detects the state data of the battery cell 10 based on the control signal. Therefore, the data processing module 500 is disposed outside the housing 100, such that the second optical communication element 510 receives the signal light 211 outside the housing 100, and the state data of the battery cell 10 is received by the data processing element 520, thereby enabling the sending and receiving of data of the battery cell 10 via optical signal transmission. Compared with wired transmission, the complexity of the wire harness in the battery cell 10 can be further reduced, and no additional through hole for the wire harness to pass through needs to be formed in the housing 100, thereby reducing the overall processing difficulty.

Further, the first optical communication element 210, the light-transmitting component 300, and the second optical communication element 510 are sequentially disposed in the thickness direction of the wall part 110. That is, the first optical communication element 210, the light-transmitting component 300, and the second optical communication element 510 are all disposed in the thickness direction of the wall part 110, such that the second optical communication element 510 receives the signal light 211, which can reduce the transmission path of the signal light 211, improve the receiving efficiency of the signal light 211, and further improve the overall data transmission efficiency.

In some embodiments, the battery cell 10 further includes an electrode post terminal 140 and a second conductive member 700. The electrode post terminal 140 passes through the wall part 110, and the second conductive member 700 is located outside the housing 100 and separately connected to the electrode post terminal 140 and the data processing module 500, such that the electrode post terminal 140 and the data processing module 500 form a current circuit. The electrode post terminal 140 may be configured to connect the battery cell 10 to an external circuit, serving as a charging and discharging interface for the battery cell 10. Specifically, the electrode post terminal 140 passes through the wall part 110, one end, located outside the housing 100, of the electrode post terminal 140 may be electrically connected to an external device, and one end, located inside the housing 100, of the electrode post terminal 140 may be electrically connected to a tab of the electrode assembly 130 to form a current circuit, such that the battery cell 10 can be charged or discharged via the electrode post terminal 140. The second conductive member 700 may be a structure such as a wire or a conductive sheet, and the second conductive member 700 may be separately connected to the data processing module 500 and the electrode post terminal 140, such that the electrode post terminal 140 and the data processing module 500 can form a current circuit via the second conductive member 700, and then the data processing module 500 may be energized by the electrode post terminal 140, thereby reducing the difficulty in supplying power to the data processing module 500.

Further, the electrode post terminal 140 further includes a positive electrode post terminal 141 and a negative electrode post terminal 142. The positive electrode post terminal 141 and the negative electrode post terminal 142 each pass through the wall part 110. The data processing module 500 is disposed between the positive electrode post terminal 141 and the negative electrode post terminal 142. The second conductive member 700 includes two second wires 710, one second wire 710 connects the positive electrode post terminal 141 to the data processing module 500, and the other second wire 710 connects the negative electrode post terminal 142 to the data processing module 500. The data processing module 500, the positive electrode post terminal 141, and the negative electrode post terminal 142 may be located on the same straight line. The data processing module 500 may be located at the middle position between the positive electrode post terminal 141 and the negative electrode post terminal 142, or the data processing module 500 may be disposed closer to the negative electrode post terminal 142 or the positive electrode post terminal 141, such that the wire harness lengths of the two second wires 710 can be reduced at the same time, the complexity of the wire harness layout can be simplified, and the difficulty in supplying power to the data processing module 500 can be reduced.

In some embodiments, the data processing module 500 further includes a wireless communication element 530. The wireless communication element 530 is connected to the data processing element 520, and the wireless communication element 530 is configured to transmit data generated based on the signal light 211 to an external device. The wireless communication element 530 is communicatively connected to the data processing element 520, which can facilitate data transmission between the data processing element 520 and the wireless communication element 530. The wireless communication element 530 may perform wireless communication with an external device. The method for wireless communication may include, but is not limited to, Bluetooth, wifi, near field communication (NFC), and the like, and the external device may include, but is not limited to, a battery management system, an in-vehicle central control system, or the like. After receiving the data generated based on the signal light 211, the wireless communication element 530 may send relevant data to the external device via wireless transmission, or receive relevant instructions sent by the external device via wireless transmission, and so on. Therefore, the data generated based on the signal light 211 can be transmitted to the external device by the wireless communication element 530. Compared with wired transmission, the complexity of the wire harness can be reduced, and the entire communication method can be simpler.

In summary, the state data of the battery cell 10 is detected by the built-in detection element 220, and the first optical communication element 210 transmits the signal light 211 generated based on the state data to the outside of the housing 100 via the light-transmitting component 300, so as to transmit the state data of the battery to the outside of the battery cell 10 via wireless transmission. Compared with wired transmission, the complexity of the wire harness in the battery cell 10 can be further reduced, and no additional through hole for the wire harness to pass through needs to be formed in the housing 100, thereby reducing the overall processing difficulty.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, wherein the battery cell comprises:
a housing, comprising a wall part, the wall part comprising a light-transmitting component; and
a detection module, disposed inside the housing, wherein the detection module comprises a detection element and a first optical communication element, the detection element is connected to the first optical communication element, the detection element is configured to detect state data of the battery cell, and the first optical communication element is configured to transmit signal light generated based on the state data to an outside of the housing via the light-transmitting component.

2. The battery cell according to claim 1, wherein the light-transmitting component penetrates through two opposite side surfaces of the wall part in a thickness direction of the wall part.

3. The battery cell according to claim 2, wherein the wall part is provided with a mounting hole penetrating through the wall part in the thickness direction , and the light-transmitting component comprises a first light-transmitting part and a second light-transmitting part connected to each other; the first light-transmitting part is embedded in the mounting hole, and the second light-transmitting part is connected to one side, facing the outside of the housing, of the wall part, or the second light-transmitting part is connected to one side, facing an inside of the housing, of the wall part.

4. The battery cell according to claim 3, wherein the light-transmitting component further comprises a third light-transmitting part, the second light-transmitting part and the third light-transmitting part are connected to two ends of the first light-transmitting part in the thickness direction, respectively, one of the second light-transmitting part and the third light-transmitting part is connected to one side, facing the outside of the housing, of the wall part, and the other is connected to one side, facing the inside of the housing, of the wall part.

5. The battery cell according to claim 1, wherein the wall part is provided with a mounting hole penetrating through the wall part in a thickness direction of the wall part; the light-transmitting component further comprises a light-transmitting main body and a sealing member, the sealing member is disposed around a peripheral side of the light-transmitting main body, and the light-transmitting main body is embedded in the mounting hole by the sealing member.

6. The battery cell according to claim 5, wherein the sealing member comprises a sealing main body part and a sealing connection part, the sealing main body part is provided with a mounting groove, a groove opening of the mounting groove faces the outside of the housing, the light-transmitting main body is disposed in the mounting groove, and the sealing connection part is connected to one side, facing the outside of the housing, of the wall part.

7. The battery cell according to claim 6, wherein a bottom wall of the mounting groove is provided with a light-transmitting hole, the light-transmitting hole communicates an inside of the housing with the mounting groove, the light-transmitting main body covers the light-transmitting hole, and the signal light is transmitted to the outside of the housing via the light-transmitting hole and the light-transmitting main body.

8. The battery cell according to any one of claims 3 to 7, wherein the mounting hole is a liquid injection hole.

9. The battery cell according to any one of claims 1 to 8, wherein the battery cell further comprises an electrode post terminal and a first conductive member, the electrode post terminal passes through the wall part, and the first conductive member is located inside the housing and separately connected to the electrode post terminal and the detection module, such that the electrode post terminal and the detection module form a current circuit.

10. The battery cell according to claim 9, wherein the electrode post terminal further comprises a positive electrode post terminal and a negative electrode post terminal, the positive electrode post terminal and the negative electrode post terminal each pass through the wall part, the detection module is disposed between the positive electrode post terminal and the negative electrode post terminal, the first conductive member comprises two first wires, one first wire connects the positive electrode post terminal to the detection module, and the other first wire connects the negative electrode post terminal to the detection module.

11. The battery cell according to any one of claims 1 to 10, wherein the battery cell further comprises a lower plastic member, the lower plastic member is disposed in an attached manner on one side, facing an inside of the housing, of the wall part, the lower plastic member is provided with an accommodating groove, a groove opening of the accommodating groove faces the wall part, and the detection module is disposed in the accommodating groove.

12. The battery cell according to any one of claims 1 to 11, wherein the battery cell further comprises a data processing module, the data processing module is disposed outside the housing, the data processing module comprises a second optical communication element and a data processing element connected to each other, the second optical communication element is configured to receive the signal light, and the data processing element is configured to receive data generated based on the signal light.

13. The battery cell according to claim 12, wherein the first optical communication element, the light-transmitting component, and the second optical communication element are sequentially disposed in a thickness direction of the wall part.

14. The battery cell according to claim 12 or 13, wherein the battery cell further comprises an electrode post terminal and a second conductive member, the electrode post terminal passes through the wall part, and the second conductive member is located outside the housing and separately connected to the electrode post terminal and the data processing module, such that the electrode post terminal and the data processing module form a current circuit.

15. The battery cell according to claim 14, wherein the electrode post terminal further comprises a positive electrode post terminal and a negative electrode post terminal, the positive electrode post terminal and the negative electrode post terminal each pass through the wall part, the data processing module is disposed between the positive electrode post terminal and the negative electrode post terminal, the second conductive member comprises two second wires, one second wire connects the positive electrode post terminal to the data processing module, and the other second wire connects the negative electrode post terminal to the data processing module.

16. The battery cell according to any one of claims 12 to 15, wherein the data processing module further comprises a wireless communication element, the wireless communication element is connected to the data processing element, and the wireless communication element is configured to transmit data generated based on the signal light to an external device.

17. The battery cell according to any one of claims 1 to 16, wherein the detection element comprises one or more of a temperature sensor, a gas pressure sensor, a voltage sensor, and an impedance sensor.

18. A battery, wherein the battery comprises the battery cell according to any one of claims 1 to 17.

19. An electric device, wherein the electric device comprises the battery according to claim 18.
